Europäisches Patentamt

European Patent Office

Office européen des brevets

(11) Publication number: **0 207 616
B1**

## (12) EUROPEAN PATENT SPECIFICATION

(45) Date of publication of patent specification: **08.08.90**

(21) Application number: **86303898.0**

(22) Date of filing: **22.05.86**

(51) Int. Cl.⁵: **A 62 D 3/00, B 01 D 53/34**

(54) Acid rain neutralization.

(30) Priority: **14.06.85 US 745284**

(43) Date of publication of application:
**07.01.87 Bulletin 87/02**

(45) Publication of the grant of the patent:
**08.08.90 Bulletin 90/32**

(84) Designated Contracting States:
**BE CH DE FR GB IT LI NL SE**

(56) References cited:
**EP-A-0 022 367
EP-A-0 125 370
DE-A-3 034 896
US-A-2 718 453
US-A-4 262 610**

**CHEMICAL ABSTRACTS, vol. 96, no. 18, 3rd May
1982, page 399, abstract no. 148875s, Columbus,
Ohio, US; R. SEQUEIRA: "Chemistry of
precipitation at high altitudes: interrelation of
acid-base components"**

(73) Proprietor: **British Columbia Research Council
3650 Wesbrook Mall
Vancouver British Columbia V6S 2L2 (CA)**

(72) Inventor: **Esplin, Gordon John
366 East 4th Street North
Vancouver British Columbia V7L 1J2 (CA)**

(74) Representative: **Pendlebury, Anthony et al
PAGE, WHITE & FARRER 54 Doughty Street
London WC1N 2LS (GB)**

Courier Press, Leamington Spa, England.

## Description

This invention relates to a method of dispersing material into the atmosphere for reaction with acidic components in the atmosphere.

The term "acid rain" is commonly used to describe the atmospheric deposition of acidic material derived from the oxides of sulfur and nitrogen. Excessive deposition of these acidic components is known to cause significant harm to the environment. The attendant socio-economic costs of these impacts has stimulated considerable research into the causes and effects of acid rain, and into methods of ameliorating this problem.

Acid rain may have existed in a mild form as long as the earth has had an oxygen containing atmosphere. Natural emissions of sulfur (biogenic and volcanic) are oxidized in a large number of atmospheric reactions including the gas phase reaction with the hydroxyl radical and the aqueous phase reaction with hydrogen peroxide. The final oxidation product of sulfur tends to form a sulfuric acid aerosol which can be deposited as acid rain.

Natural emissions of acidic precursors are largely balanced by a concurrent emission of acid neutralizing components — ammonia from the decay of biomass and alkaline particulate from wind-blown crustal matter (fugitive dust). The wet and dry deposition of the overall reaction products, which include ammonium and calcium bisulfate and sulfate, tend to close the familiar nitrogen and sulfur cycles. The natural deposition is therefore approximately neutral. It may be slightly acidic or slightly basic, depending on the nature of the condensation nuclei. It is rarely at pH 5.6, the acidity resulting from the equilibrium between atmospheric carbon dioxide and pure water, since a pure water aerosol does not naturally exist. Sequeira, R. 1982. "Acid Rain: An Assessment Based on Acid-Base Considerations", J.A.P.C.A., 32 (3):241—245; Charlson, R. J., and Rodhe, H., 1982. "Factors Controlling the Acidity of Natural Rainwater", Nature, 295: 683—685.

The natural biogeochemical cycles are disrupted when anthropogenic emissions of acid precursors grossly exceed the natural emission of neutralizing components. This has happened in heavily industrialized regions where sulfur containing coal is burned for its energy and where the automobile-derived oxides of nitrogen ($NO_x$) emissions are significant.

Emissions of sulfur dioxide ($SO_2$) in the United States and Canada are estimated to be $25.7 \times 10^6$ tonnes and $5 \times 10^6$ tonnes, respectively. Emissions of nitrogen oxides ($NO_x$) in the two countries are estimated to be $22.2 \times 10^6$ tonnes and $1.9 \times 10^6$ tonnes, respectively (U.S.-Canada Research Consultation Group, 1980). Although only modest increases are expected in future $SO_2$ emissions, larger $NO_x$ emissions are anticipated from increased use of fossil fuels. Large fractions of the emission sources are in the north-eastern and mid-west United States (e.g., Ohio Valley), where the emissions exceed the natural emissions by more than 10 times.

Attention is focused on the acid rain problem by enumerating the number of dead lakes in eastern North America and in Scandinavia. There are, however, other negative effects which are significant and which may incur a greater socio-economic cost to society. Excessive acid deposition (wet and dry) into watersheds which have little neutralizing or bicarbonate buffering capacity can result in surface waters being lowered below pH 4—4.5, which is the survival threshold for most aquatic species. The lowered pH results in a significant alteration to the biogeochemistry of the watershed, with heavy metal mobilization and loss of calcium being of particular significance. A high ratio of aluminum to calcium appears to be an important parameter in the uptake and hence toxicity of aluminum by both flora and fauna. For example, Ulrich and Pankrath (1983) note that the potential for aluminum-induced root toxicity is high when the ratio of calcium to aluminum in the soil drops below 1 in acidic soils (pH <4).

Applicant has examined fish-count data and lake chemistry for south Norway lakes as presented by Chester (1982). A linear plot of the percent fishless lakes versus the aluminum to calcium ion ratio gives an almost perfect correlation between these parameters (a correlation coefficient of 0.99). Hence it would strongly suggest that the biological toxicity of aluminum is reduced by the presence of adequate calcium.

Leivestad (1982) discusses a Norwegian study on the mode of toxic action of aluminum on fish. It is noted that "calcium additions in the experiments gave increased survival and alleviated stress symptoms" even though the pH was maintained at a constant acidity.

In addition excessive acid deposition is believed to effect the rate at which microorganisms decompose forest litter and therefore to alter the recycling of macronutrients and the creation of new biomass.

From the above discussion it is clear that watersheds (lakes and forests) which are sensitive to acid rain, due to the lack of adequate natural buffering, will benefit from the deposition of limestone particulates. Throughout the specification, limestone is used here as a generic term for carbonate rocks or fossils; it is composed primarily of calcium carbonate or combinations of calcium and magnesium carbonate, with varying amounts of impurities. These materials include limestone, dolomite, aragonite, calcite and the like.

Surface water and ground water acidification can indirectly affect morbidity through the increased mobilization and uptake of heavy metals — biomagnification through the food chain (e.g. fish), uptake by food crops, and increased heavy metals and metal corrosion products in drinking water.

Inhalation of acidic sulfate aerosol is thought to affect the body's immune system as well as having direct effects on cardiovascular function. The majority of sulfate aerosols are between about 0.1 and 2 µm in diameter. In this size range deposition in the airways of human lungs is generally small compared with the transportation to the alveolar regions. Hence these particles can penetrate deeply into the lungs where they may be absorbed or be removed by alveolar macrophages. Air pollutants are known to damage the macrophages and therefore to impair the lung's defence against submicron particulate matter.

Larger particles, such as biologically inert limestone dust particulates, of 5—15 µm in diameter, are deposited in the upper airways where a very efficient mucociliary transport mechanism rapidly removes them.

Possibly the most direct economic consequence of acid rain is the accelerated deterioration of galvanized metal surfaces and of many common exterior paints. Crocker and Regens (1985) estimate this economic loss at $2 billion in the eastern third of the U.S.A. during 1978.

Research using simulated acid rain has shown that excessively acid (pH <4) precipitation can cause folialar damage and decreased yield in sensitive crops. Perhaps of equal or greater importance are the phytotoxic gases (sulfur dioxide, ozone, PAN, etc.) associated with the long range transportation of air pollution and acid rain.

Aerosols formed by the accumulation of the reaction products of sulfur oxides tend to have diameters close to the wavelength of visible light and hence strongly interact with light transmission through Mie Scattering. Much of the atmospheric haze over eastern North America and over Europe is caused by the presence of sulfate aerosols.

These aerosols are too small to be significantly affected by gravitation. Their tropospheric residence time is from a few hours to a few days, with rain-out and wash-out being the major removal mechanisms.

Malm and Johnson (1984) conducted a two year study of the optical characteristics of fine and coarse particulates at Grand Canyon, Arizona. They found that the fine sulfate particulates were over fourteen times as effective as coarse particles (2.5—15 µm in diameter) in reducing visibility. The sulfates were only 14% of the total suspended particulate mass yet contributed 63% of the visibility reduction.

Dzubay, T. G., Stevens, R. K., and Lewis, C. W., 1982. "Visibility and Aerosol Composition in Houston, Texas", Environ. Sci. Technol., 16: 514—525, investigated the visibility and aerosol composition in urban Houston, Texas. About 80% of the fine particulates were sulfates or sulfuric acid with the balance being carbonaceous soot. The coarse particles were mainly of crustal origin (road dust, etc.). It was found that visible light scattering was highly correlated (r = 0.997) with the concentration of the fine (diameter less than 2.5 µm) particles.

A similar study by Wolff, G. T., et al, 1982, "The Relationships Between the Chemical Composition of Fine Particles and Visibility in the Detroit Metropolitan Area", J.A.P.C.A., 32(12): 1216—1220, of the relationship between the chemical composition of fine particles and visibility in the Detroit metropolitan area showed that ammonium sulfate dominated (50%) of the fine mass. The contributors to the observed light extinction were: sulfate and its associated water, 65%; carbon, 20%; Rayleigh scattering, 7%; $NO_2$, 4%; and other fine particulate species, 4%. They concluded that sulfates are the most efficient light-scattering species per unit mass of dry weight. The contribution of coarse particulate matter to urban light scattering was negligible.

From these studies it is apparent that the key to reducing regional atmospheric haze is the reduction of the concentration of fine sulfate aerosol.

An estimation has been made of the potential visibility improvement brought about by dispersing 50 micrograms per cubic meter of coarse limestone particulates into the atmosphere. By using the data of Wolff, G. T., Kelly, N. A., and Martin, A. F., 1981, "On the Sources of Summertime Haze in the Eastern United States", Science 211: 703—704, for the atmospheric concentration of pollutant species in Eastern United States during episodic conditions, and the extinction coefficient versus particle size/composition data of Malm, W. C., and Johnson, C. E., 1984, "Optical Characteristics of Fine and Coarse Particulates at Grand Canyon, Arizona", Atmospheric Environment, 18 (6): 1231—1237, it can be shown that there will be a 50% improvement in visibility if the sulfate concentration is reduced by 50% through precursor $SO_2$ scavenging. There will be a 100% improvement in the visible range (from 10 km to 20 km) if the sulfate aerosol is reduced by 75%.

Various estimates place the direct cost of acid rain in North America at several billion dollars per year. In addition there may be a significant long-term cost to the forest ecosystem, a resource which in Canada alone provides directly or indirectly one out of every 10 jobs, $18.5 billion worth of shipped material in 1979, a $10.6 billion net contribution to Canada's balance of payments (Howard and Perley, 1980).

Acid rain can be mitigated by curtailing the anthropogenic emission of acid rain precursors. Available options include a shift to relatively clean energy sources (nuclear, solar, etc.), desulfurization of fossil fuels, modified combustion of fuels to minimize pollutant emissions, and flue gas desulfurization. There is no panacea; all of the above options are being used and will play a role in mitigating acid rain.

Flue gas desulfurization (FGD) is currently seen as the least cost process (socially and economically) for reducing sulfur emissions in eastern North America. However, present proven technology is expected to reduce anthropogenic sulfur dioxide emissions by only 50% at a cost exceeding $10 billion/year (Torrens, 1984). There is some doubt whether such an expenditure, by itself, will do much to significantly reduce the acidification of sensitive watersheds or to decrease the corrosive nature of acid rain.

Further reduction in emissions would be prohibitively expensive. Retrofit FGD has a capital cost of approximately $140/kw capacity ($140 million for a typical 1000 MWe power station). Total cost of generation is increased by about 10 mills/kwh (Rubin, 1983) FGD also presents a serious solid-waste disposal problem when based on conventional technology.

Various investigators (Innes, 1984) have suggested relaxing regulations on particulate emissions so as to allow a greater amount of alkaline material to escape to the atmosphere. However, associated with the alkaline fly-ash emitted from fossil-fuel combustion are heavy metals which are toxic to the environment and they must be stringently controlled.

Liming of lakes has been widely practiced in Scandinavia. It can only be used where lake access is available and it does nothing for the important forest ecosystem.

Accordingly, the present invention provides a method for dispersing material into the atmosphere for reaction with acidic components in the atmosphere that comprises dispersing into the atmosphere a sufficiently basic material for scavenging sulfur dioxide molecules in the atmosphere under conditions favourable for generation of atomic oxygen or hydroxyl radicals or peroxyl radicals, or dissolved hydrogen peroxide or calcium carbonate in atmospheric water droplets, in the form of a dust having a particle size predominantly in the range from about 5 to 15 micrometers.

In a preferred embodiment the invention is a method of reducing atmospheric acidity and of supplying magnesium and calcium to alkaline deficient land that comprises dispersing into the atmosphere a material containing calcium carbonate in the form of a dust having a particle size predominantly in the range 5 to 15 µm.

In a further embodiment for special application, such as large-scale forest fertilization, the process can also be used to disperse 5 to 15 µm diameter particles of say potassium carbonate and/or bicarbonate into the atmosphere. This could be done in conjunction with limestone particles or as the sole additive.

As indicated above the limestone may be dolomite, which has a magnesium content. The dust may be dispersed by injecting it into the exhaust gas of an existing, tall smoke stack. Preferably such a stack will be greater than 500 feet (152.4 m) high. Alternatively a fan can be used to blow dust from a tall stack. Such a stack, which may be specially constructed, may be self-supporting or supported by guys or by tethered balloons.

Aspects of the invention are illustrated in the drawings in which:

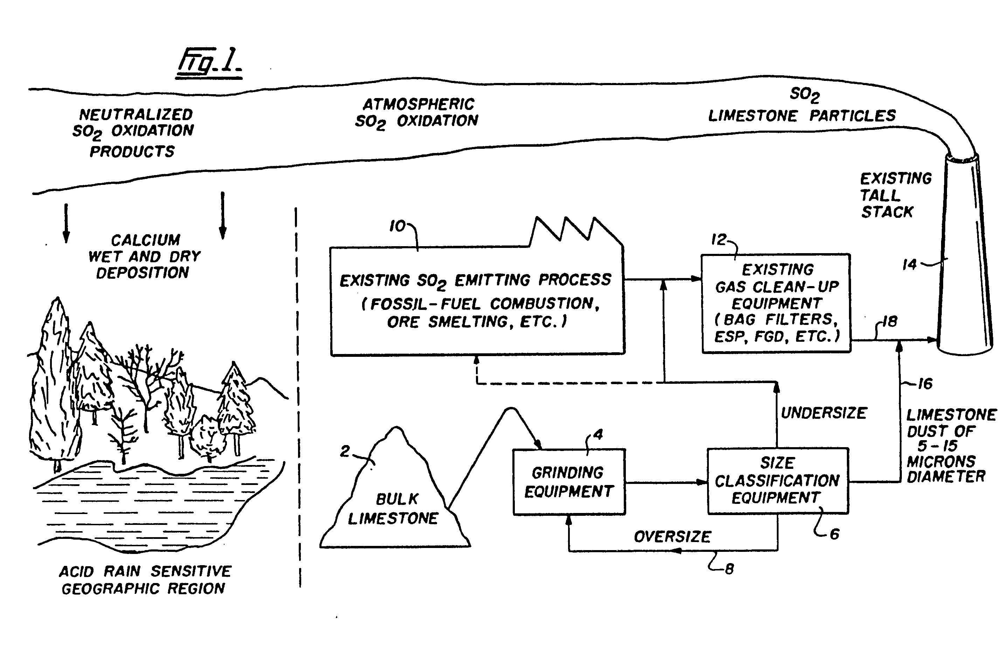

Figure 1 shows an acid rain neutralization cycle;

Figure 2 illustrates a detail of Figure 1;

Figure 3 illustrates an alternative to Figure 2; and

Figure 4 illustrates a further aspect of the invention.

In the illustrated embodiment of the invention a limestone material is dispersed into the atmosphere to assist natural atmospheric process that neutralize acid rain components, reduce atmospheric concentration of submicron sulfate aerosols and, at the same time, furnish calcium to alkali-deficient watersheds. Limestone is biologically harmless. However it can neutralize strong acids to release carbon dioxide, a natural weak acid gas.

The drawings show bulk limestone at a source 2, which is ground down by conventional grinding equipment at 4. The limestone is ground to particle size of approximately 5 to 15 µm in diameter and equipment with the ability to do this is well known. This size range is a window between very fine particles, which contribute disproportionately to atmospheric haze due to their scattering of visible light, and large particles which are subject to significant gravitational settling, are thus quickly deposited on the ground and therefore have little affect on acid rain.

The dust is classified at 6. The classification of the dust produces three fractions. The desired 5 to 15 µm fraction, an undersized fraction and an oversized fraction. The oversized fraction is recycled through line 8 for further grinding. The undersized material is used by injecting it into or after an industrial process, for example, a boiler as shown at 10 for partial reaction with sulfur oxides and subsequent removal with the existing pollution removal system shown at 12. Such removal systems includes bag-houses, electrostatic precipitators, wet scrubbers and flue gas desulfurizations. Thus the correct size range is injected into the breaching of a self-supporting smoke stack 14 through line 16 and mixes with the effluent from the existing gas clean-up equipment introduced into the stack through line 18. The dust is thus emitted into the atmosphere along with product gases from fuel combustion and the remaining acid rain precursors (the oxides of sulfur and/or nitrogen).

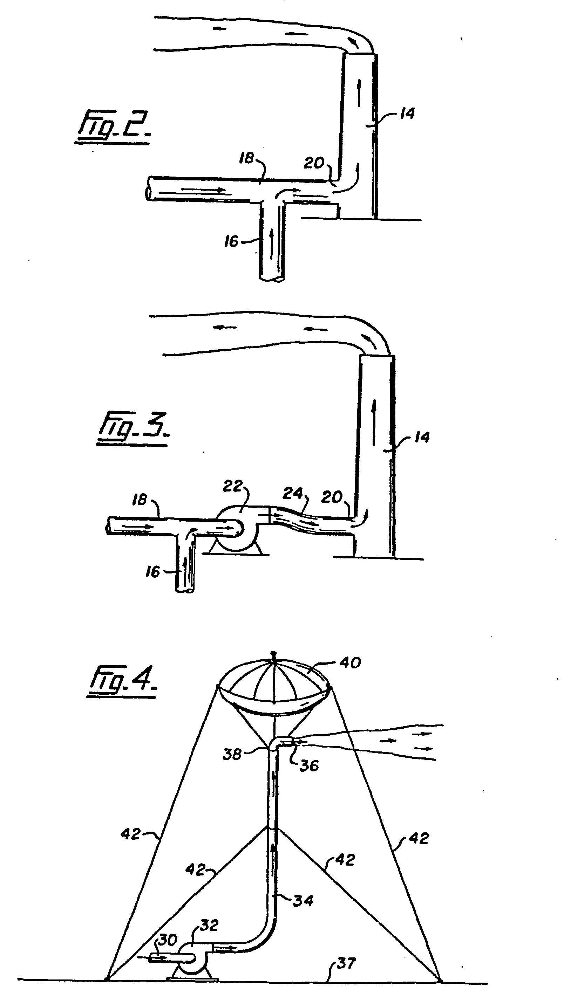

Figure 2 shows a simple form of adding the dust particles to the stack 14 using a simple T-connection to introduce the pneumatically conveyed particles to the breach 20 of the stack 14.

In Figure 3 the equipment of Figure 2 is varied by inserting a large fan 22 after the junction of lines 16 and 18 and allowing the dust, combined with exhaust gases, through passage 24 to the breach 20.

Figure 4 shows equipment specially set up to practice the invention. A line 30 supplies the desired dust to fan 32. Fan 32 propels the dust to stack 34 provided with outlet 36. Outlet 36 is preferably 500 to 1500 feet above the ground 37 and is maintained at that height by being attached at 38 to a balloon 40 filled with a buoyant gas, preferably helium. Guys 42 locate the balloon 40 and the stack 34.

Once emitted into the atmosphere the limestone dust is quickly diluted and dispersed by atmospheric turbulence so that its concentration, on a weight basis, is similar to that of the normal background level for suspended particulates (in the order of 50 micrograms per cubic meter).

Because of their small size (5—15 µm in diameter) the dust particles will stay in the atmosphere for a long period and in fact, have a deposition velocity very similar to that of sulfur dioxide. The increase in atmospheric haze due to the emitted limestone particles will be small in comparison to the existing haze which is caused mainly by fine (diameter less than 2.5 µm particles composed largely of sulfate species.

Under low humidity, "clear sky" weather conditions sulfur dioxide reacts only slowly with limestone particles. However, these weather conditions are favourable for the generation of hydroxyl radicals which react rapidly with gaseous sulfur dioxide to create sulfuric acid molecules. It is common knowledge that strong acids, such as sulfuric acid and nitric acid, are neutralized by limestone dust so that a certain fraction of these molecules will be captured and neutralized by limestone dust. By scavenging a fraction of the acid and acid precursor molecules from the atmosphere, it was shown above that atmospheric haze under clear sky conditions can be reduced by the addition of "coarse" (5—15 µm) limestone particles.

By scavenging sulfur dioxide molecules, and their subsequent reaction products, from the atmosphere, the atmospheric haze under clear sky conditions will be reduced by the addition of limestone particles.

Under the high humidity conditions which are necessary for cloud formation, particles in the atmosphere act as nuclei for condensation. Naturally occurring atmospheric hydrogen peroxide is extremely soluble in water and will rapidly oxidize any sulfur dioxide which initially diffuses into the cloud droplets, thereby yielding acidic cloud water. However, if a particle of limestone acts as a condensation nucleus then the acid will be neutralized as rapidly as it is formed. If the atmosphere contains adequate calcium limestone dust then it is clear that acid rain (or acid fog) cannot be generated. It should be pointed out here that a stoichiometric amount of limestone dust may not be required to neutralize acid rain. The atmosphere normally contains ammonia (from the decomposition of biomass) and a small amount of alkaline dust, both of which can neutralize a portion of the oxidized acid rain precursors (sulfur dioxide and oxides of nitrogen).

Two chemical reaction sequences are believed to be of major significance.

In a relatively dry atmosphere the direct reaction of sulfur dioxide ($SO_2$) with particles of limestone is extremely slow, Corn, M., and Chenc, R. T., 1972, "Interactions of Sulfur Dioxide with Insoluble Suspended Particulate Matter", J.A.P.C.A., 22(11): 870—875; Gauri, K. L., popli, R., and Sarma, A. C., 1983, "Effect of Relative Humidity and Grain Size on the Reaction Rates of Marble at High Concentrations of $SO_2$", Durability of Building Materials, 1 (1982/1983): 209—216, Elsevier Scientific Publishing Co. (Amsterdam). However, through photochemical reactions $SO_2$ is oxidized by atomic oxygen O(3P), the hydroxyl radical (OH), or by peroxyl radicals ($RO_2$) to give sulfur trioxide ($SO_3$), Chameides, W. L., and Davis, D. D. "Chemistry in the Troposphere", C & EN, 60(40): 38—52; Seigneur, C., and Saxema, P., 1984, "A Study of Atmospheric Acid Formation in Different Environments", Atmospheric Environment, 18(10): 2109—2124. Sulfur trioxide immediately reacts with water molecules to form submicron acidic aerosols (nucleation) which, due to their small size, are subject to Brownian diffusion and, which therefore are captured by limestone particles or by other acid aerosols (coalescence).

The second class of reactions, liquid-gas reactions, are expected to dominate the neutralization of acid rain in humid atmospheres. The limestone dust particles behave as cloud condensation nuclei and accrete a surface layer of water. Sulfur dioxide diffusing to the surface will be absorbed and will react with dissolved calcium carbonate to form calcium sulfate. This reaction has been extensively studied, Nesbitt, F. L., Shale, C. C., and Stewart, G. W., 1978, "Kinetic Study of a Low Temperature Flue Gas Desulfurization Process Using Moist Limestone", U.S. Dept. of Energy, Morgantown Energy Technology Centre (METC/RI—78/10); Klingspor, J., Karlsson, H. T., and Bjerle, I., 1983. "A Kinetic Study of the Dry $SO_2$-Limestone Reaction at Low Temperature", Chem. Eng. Commun. 22: 81—103. The reaction is favoured by a high humidity and by a small particle diameter (large surface area per unit mass).

Other gas-liquid reactions which are expected to be important within cloud water droplets are the oxidation of $SO_2$ by dissolved hydrogen peroxide, Seigneur, C., and Saxema, P., 1984, "A Study of Atmospheric Acid Formation in Different Environments", Atmospheric Environment, 18(10): 2109—2124, and the metal and soot-catalyzed oxidation of $SO_2$, Toossi, R., and Novakov, T., 1985, "The Lifetime of Aerosols in Ambient Air: Consideration of the Effects of Surfactants and Chemical Reactions", Atmospheric Environment, 19(1): 127—133. These reactions will yield acidic droplets which can, by Brownian and/or turbulent diffusion, collide with limestone dust particles and thereby be neutralized.

The acidic aerosols also tend to be neutralized by ammonia gas which originates from the decay of biomass, Charlson, R. J. and Rodhe, H., 1982, "Factors Controlling the Acidity of Natural Rainwater", Nature, 295: 683—685.

Unreacted limestone will continue to act as an acid buffer when it is deposited onto a sensitive watershed. Therefore, it is not important or necessary for the limestone neutralization reaction to occur only in the atmosphere.

A portion of the partially reacted carbonate dust and acid rain precursors will be deposited, via wet or dry deposition mechanisms, to receiving watersheds. If the watershed lacks adequate strong acid buffering capacity then it will be sensitive to acid rain inputs. Essential nutrients, such as calcium, tend to leach from the watershed while potentially toxic heavy metals, such as aluminum, are transformed to a biologically available form.

By supplying calcium and magnesium carbonates to the watershed residual acidity is neutralized, calcium is available for biomass growth, and the biological uptake of toxic heavy metals is reduced. While it is common to add lime to acid damaged lakes, when they are accessible, it has not been feasible to treat entire watersheds. The invention offers a way to help protect large, sensitive, geographical areas at minimal cost.

The method of the invention is calculated to be the least expensive option which can be rapidly deployed to truly alleviate the symptoms of acid rain. The cost to the economy would be minimal. The capital cost is expected to be of the same order as the only partially effective furnace limestone injection systems: about $15 to $30/kw (Yeager, 1984).

There would be no large ponds of flue gas desulfurization solid wastes nor outages due to equipment corrosion and scaling. The regional haze problem which plagues North America and Europe would be directly addressed because of the expected significant reduction in sulfate aerosol. The leaching of calcium from sensitive watersheds would be reversed and the threat of heavy metal toxicity to forests and lakes reduced.

## Claims

1. A method for dispersing material into the atmosphere for reaction with acidic components in the atmosphere that comprises dispersing into the atmosphere a sufficiently basic material for scavenging sulfur dioxide molecules in the atmosphere under conditions favourable for generation of atomic oxygen or hydroxyl radicals or peroxyl radicals, or dissolved hydrogen peroxide or calcium carbonate in atmospheric water droplets, in the form of a dust having a particle size predominantly in the range from about 5 to 15 micrometers.

2. A method as claimed in claim 1, in which the said material comprises limestone.

3. A method as claimed in claim 2, in which the limestone is dolomite.

4. A method as claimed in claim 1, 2 or 3, in which the said material comprises potassium carbonate or bicarbonate.

5. A method as claimed in any one of the preceding claims, comprising grinding into fine particles the said sufficiently basic material; classifying the particles into three size fractions, (1) a first fraction predominantly in the range of from about 5 to 15 micrometers, (2) a second fraction less than about 5 micrometers and (3) a third fraction greater than about 15 micrometers; and dispersing the first 5 to 15 micrometer fraction into the atmosphere.

6. A method as claimed in any one of the preceding claims, wherein the dust is dispersed by injecting it into the exhaust gases of a smoke stack.

7. A method as claimed in claim 6, in which the dust is dispersed by the use of a fan blowing the dust up the stack.

8. A method as claimed in claim 6 or 7, in which the stack is self-supporting.

9. A method as claimed in claim 6 or 7, in which the stack is anchored by guys.

10. A method as claimed in claim 6 or 7, in which the stack is supported by tethered balloons.

## Patentansprüche

1. Verfahren zur dispersen Verteilung eines Materials in der Atmosphäre zur Umsetzung mit sauren Bestandteilen in der Atmosphäre, dadurch gekennzeichnet, daß man ein genügend basisches Material zum Abfangen von Schwefeldioxidmolekülen in der Atmosphäre unter zur Erzeugung von atomarem Sauerstoff oder Hydroxyradikalen oder Peroxyradikalen günstigen Bedingungen oder in atmosphärischen Wassertropfen gelöstes Wasserstoffperoxyd oder Calciumkarbonat in Form eines Staubs mit einer Teilchengröße vorwiegend in dem Bereich von etwa 5 bis 15 µm in der Atmosphäre dispers verteilt.

2. Verfahren nach Anspruch 1, worin besagtes Material aus Kalk besteht.

3. Verfahren nach Anspruch 2, worin es sich bei dem Kalk um Dolomit handelt.

4. Verfahren nach Anspruch 1, 2 oder 3, worin jenes Material aus Kaliumkarbonat oder -hydrogenkarbonat besteht.

5. Verfahren nach einem der vorhergehenden Ansprüche, dadurch gekennzeichnet, daß man jenes genügend basische Material zu feinen Teilchen mahlt; der Größe nach in drei Fraktionen aufteilt, (1) eine erste Fraktion vorwiegend in dem Bereich von etwa 5 bis 15 µm, (2) eine zweite Fraktion von weniger als etwa 5 µm und (3) eine dritte Fraktion oberhalb etwa 15 µm; und die erste 5 bis 15 µm Fraktion in der Atmosphäre dispers verteilt.

6. Verfahren nach einem der vorhergehenden Ansprüche, dadurch gekennzeichnet, daß man den Staub durch Einspritzen in die Abgase eines Schornsteins dispers verteilt.

7. Verfahren nach Anspruch 6, worin man den Staub durch Verwendung eines Lüfters dispers verteilt, der den Staub den Schornstein hinaufbläst.

8. Verfahren nach Anspruch 6 oder 7, worin der Schornstein selbsttragend ist.

9. Verfahren nach Anspruch 6 oder 7, worin der Schornstein durch Abspannseile verankert ist.

10. Verfahren nach Anspruch 6 oder 7, worin der Schornstein durch mit Halteseilen befestigten Ballons gestützt wird.

**Revendications**

1. Procédé de dispersion de matière dans l'atmosphère pour réaction avec des composants acides dans l'atmosphère qui consiste à disperser dans l'atmosphère une matière suffisamment basique pour débarrasser l'atmosphère des molécules de dioxyde de soufre dans des conditions propices à la production d'oxygène atomique ou de radicaux hydroxyles ou peroxyles, ou de peroxyde d'hydrogène ou de carbonate de calcium dissous dans les gouttelettes d'eau atmosphérique, sous forme d'une poussière présentant une grosseur de particules essentiellement dans la plage d'environ 5 à 15 micromètres.

2. Procédé selon la revendication 1, dans lequel ladite matière comprend du calcaire.

3. Procédé selon la revendication 2, dans lequel le calcaire est de la dolomite.

4. Procédé selon la revendication 1, 2 ou 3, dans lequel ladite matière comprend du carbonate ou du bicarbonate de potassium.

5. Procédé selon l'une quelconque des revendications précédentes, consistant à broyer en fines particules ladite matière suffisamment basique; à classer les particules en trois fractions de taille, (1) une première fraction essentiellement dans la plage d'environ 5 à 15 micromètres, (2) une deuxième fraction inférieure à environ 5 micromètres et (3) une troisième fraction supérieure à environ 15 micromètres; et à disperser la première fraction de 5 à 15 micromètres dans l'atmosphère.

6. Procédé selon l'une quelconque des revendications précédentes, dans lequel la poussière est dispersée en étant injectée dans les gaz d'échappement d'une cheminée.

7. Procédé selon la revendication 6, dans lequel la poussière est dispersée par l'utilisation d'un ventilateur faisant monter la poussière dans la cheminée.

8. Procédé selon la revendication 6 ou 7, dans lequel la cheminée est autoportante.

9. Procédé selon la revendication 6 ou 7, dans lequel la cheminée est ancrée par des haubans.

10. Procédé selon la revendication 6 ou 7, dans lequel la cheminée est supportée par des ballons amarrés.

# Fig.1.

NEUTRALIZED
SO$_2$ OXIDATION
PRODUCTS

ATMOSPHERIC
SO$_2$ OXIDATION

SO$_2$
LIMESTONE PARTICLES

EXISTING
TALL
STACK

CALCIUM
WET AND DRY
DEPOSITION

ACID RAIN SENSITIVE
GEOGRAPHIC REGION

10

EXISTING SO$_2$ EMITTING PROCESS
(FOSSIL-FUEL COMBUSTION,
ORE SMELTING, ETC.)

12

EXISTING
GAS CLEAN-UP
EQUIPMENT
(BAG FILTERS,
ESP, FGD, ETC.)

14

18

16

UNDERSIZE

LIMESTONE
DUST OF
5-15
MICRONS
DIAMETER

2

BULK
LIMESTONE

4

GRINDING
EQUIPMENT

SIZE
CLASSIFICATION
EQUIPMENT

6

OVERSIZE

8

EP 0 207 616 B1

_Fig.2._

18  20  14  16

_Fig.3._

18  22  24  20  14  16

_Fig.4._

40  38  36  42  42  42  42  34  30  32  37

2